(19) Europäisches Patentamt
European Patent Office
Office européen des brevets

(11) EP 4 726 438 A1

(12) **EUROPEAN PATENT APPLICATION**
published in accordance with Art. 153(4) EPC

(43) Date of publication:
15.04.2026 Bulletin 2026/16

(21) Application number: 23956014.7

(22) Date of filing: 16.10.2023

(51) International Patent Classification (IPC):
*G01W 1/10* (2006.01)

(52) Cooperative Patent Classification (CPC):
G01W 1/10

(86) International application number:
PCT/JP2023/037420

(87) International publication number:
WO 2025/083760 (24.04.2025 Gazette 2025/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: IHI Corporation
Tokyo 135-8710 (JP)

(72) Inventors:
• YAMAMOTO Mitsutoshi
Tokyo 135-8710 (JP)
• ISO Yoshiyuki
Tokyo 135-8710 (JP)

(74) Representative: Marks & Clerk LLP
15 Fetter Lane
London EC4A 1BW (GB)

(54) **THERMAL/WIND ENVIRONMENT INFORMATION GENERATION DEVICE, THERMAL/WIND ENVIRONMENT INFORMATION GENERATION METHOD, DISASTER PREVENTION/ MITIGATION INFORMATION GENERATION DEVICE, AND DISASTER PREVENTION/ MITIGATION INFORMATION GENERATION METHOD**

(57) A thermal and wind environment information generation device (200) includes a meteorological information acquisition unit (201), a target region setting unit (202), and a thermal and wind environment prediction unit (211). The meteorological information acquisition unit (201) acquires, as meteorological information for a target position, wind direction information, wind speed information, and temperature information for a position within a predetermined range from the target position, obtained by analyzing wide-area meteorological observation data. The target region setting unit (202) sets a region including the target position as a target region. The thermal and wind environment prediction unit (211) generates prediction information for the thermal and wind environment for each position within the target region at a target date and time by executing Thermofluid Analysis Processing for the target region based on the information acquired by the meteorological information acquisition unit.

FIG. 1

**Description**

TECHNICAL FIELD

The present disclosure relates to a thermal and wind environment information generation device, a thermal and wind environment information generation method, a disaster prevention and mitigation information generation device, and a disaster prevention and mitigation information generation method.

BACKGROUND ART

In recent years, the number of natural disasters has been increasing not only domestically but worldwide, and economic losses due to disasters are also on an increasing trend. Major natural disasters in Japan include the Great Hanshin-Awaji Earthquake and the Great East Japan Earthquake. Furthermore, in recent years, damage from heavy rains and typhoons has been increasing. For this reason, even if natural disasters cannot be prevented, there is a need for disaster prevention measures to eliminate human and infrastructure damage when disasters occur, and for mitigation measures to reduce such damage.

CITATION LIST

PATENT LITERATURE

Patent Literature 1: Japanese Patent Application Laid-Open No. 2002-296362
Patent Literature 2: Japanese Patent Application Laid-Open No. 2001-325555

SUMMARY OF THE INVENTION

TECHNICAL PROBLEM

Meanwhile, in recent years, DX (Digital Transformation) and digital twin initiatives have been promoted. Along with this, efforts to apply various data and simulations collected from the real world to business and operational transformation are progressing. This data includes data necessary for disaster prevention and mitigation (see Patent Literature 1).

However, even using such data, observation technology and simulation technology for grasping in real time meteorological information such as wind direction, wind speed, and temperature for localized areas, for example, areas ranging from several meters to several tens of meters, have not been established. For instance, with observation technology, it is difficult to obtain localized data over a wide range due to restrictions on the installation of observation equipment. Weather forecast analysis conducted by the Japan Meteorological Agency can only predict meteorological data for areas in units of several kilometers at finest resolution.

Additionally, if Numerical Thermofluid Analysis technology capable of analyzing atmospheric flow and the like is utilized, it is possible to grasp localized meteorological data (see Patent Literature 2). However, Numerical Thermofluid Analysis technology requires time for analysis, resulting in loss of real-time capability.

Furthermore, since Numerical Thermofluid Analysis technology has a high computational load, it is difficult to set a wide analysis target area, and it cannot consider wide-area natural environment information, such as the effects of typhoons. For this reason, with Numerical Thermofluid Analysis technology, it is difficult to obtain data necessary for disaster prevention and mitigation with high accuracy in real time.

The present disclosure aims to provide a thermal and wind environment information generation device, a thermal and wind environment information generation method, a disaster prevention and mitigation information generation device, and a disaster prevention and mitigation information generation method capable of generating prediction information for the thermal and wind environment at a localized position with high accuracy in real time while considering wide-area meteorological information.

SOLUTION TO PROBLEM

A thermal and wind environment information generation device according to the present disclosure comprises: a meteorological information acquisition unit that acquires, as meteorological information for a target position, wind direction information, wind speed information, and temperature information for a position within a predetermined range from the target position, obtained by analyzing wide-area meteorological observation data; a target region setting unit that sets a predetermined region including the target position as a target region; and a thermal and wind environment prediction unit that generates prediction information for the thermal and wind environment including at least any one of wind speed, wind direction, temperature, and wind pressure for each position within the target region at a predetermined date and time, by executing Thermofluid Analysis Processing for the target region based on the information acquired by the meteorological information acquisition unit.

The target region setting unit may set the target region based on the wind direction information acquired by the meteorological information acquisition unit such that the target region includes the target position and has a wider area on the upwind side of the target position than an area on downwind side of the target position.

The meteorological information acquisition unit may acquire meteorological information for any position selected from a plurality of positions within a predetermined range from the target position as the meteorological information for the target position.

The meteorological information acquisition unit may select the nearest position on the upwind side of the target position from among the plurality of positions within a predetermined range from the target position, and acquire the meteorological information for the selected position as the meteorological information for the target position.

The meteorological information acquisition unit may acquire a plurality of wind speed information items for each height from the ground as the wind speed information, and acquire a plurality of temperature information items for each height from the ground as the temperature information.

The thermal and wind environment information generation device may further comprise a ground object information acquisition unit that acquires information on the type, position, shape, size, and material of ground objects within the target region, and the thermal and wind environment prediction unit may generate the prediction information for the thermal and wind environment using the information acquired by the ground object information acquisition unit.

A thermal and wind environment information generation method according to the present disclosure is a thermal and wind environment information generation method by a thermal and wind environment information generation device, comprising: acquiring, as meteorological information for a target position, wind direction information, wind speed information, and temperature information for a position within a predetermined range from the target position, obtained by analyzing wide-area meteorological observation data; setting a predetermined region including the target position as a target region; and generating prediction information for the thermal and wind environment including at least any one of wind speed, wind direction, temperature, and wind pressure for each position within the target region at a predetermined date and time, by executing Thermofluid Analysis Processing for the target region based on the acquired information.

A disaster prevention and mitigation information generation device according to the present disclosure comprises: any one of the thermal and wind environment information generation devices described above; and a disaster prevention and mitigation information generation unit that generates information for disaster prevention or mitigation for each position within the target region using the prediction information for the thermal and wind environment generated by the thermal and wind environment prediction unit.

The disaster prevention and mitigation information generation unit may output the generated information for disaster prevention or mitigation for each position within the target region to an output unit.

A disaster prevention and mitigation information generation method according to the present disclosure is a method wherein a disaster prevention and mitigation information generation device comprising any one of the thermal and wind environment information generation devices described above and a disaster prevention and mitigation information generation unit generates information for disaster prevention or mitigation for each position within the target region using the prediction information for the thermal and wind environment generated by the thermal and wind environment information generation device.

ADVANTAGEOUS EFFECTS OF INVENTION

According to the present disclosure, it is possible to generate prediction information for the thermal and wind environment at a localized position with high accuracy in real time while considering wide-area meteorological information.

BRIEF DESCRIPTION OF DRAWINGS

[Fig. 1] Fig. 1 is a block diagram showing the configuration of a PC equipped with a thermal and wind environment information generation device and a disaster prevention and mitigation information generation device according to an embodiment.
[Fig. 2] Fig. 2 is a flowchart showing the operation of the thermal and wind environment information generation device and the disaster prevention and mitigation information generation device according to an embodiment.

[Fig. 3] Fig. 3 is an explanatory diagram showing a position to be analyzed by the thermal and wind environment information generation device and the disaster prevention and mitigation information generation device according to an embodiment, and objective analysis coordinate positions from which meteorological information used for the analysis is acquired.

[Fig. 4] Fig. 4 is an explanatory diagram showing the position of a region to be analyzed by the thermal and wind environment information generation device and the disaster prevention and mitigation information generation device according to an embodiment.

[Fig. 5] Fig. 5 is an explanatory diagram showing a state in which a target region to be analyzed by the thermal and wind environment information generation device and the disaster prevention and mitigation information generation device according to an embodiment is rotated by a predetermined angle.

[Fig. 6] Fig. 6 is a graph showing wind speed information at multiple altitudes in the target region acquired by the thermal and wind environment information generation device and the disaster prevention and mitigation information generation device according to an embodiment, an approximation curve calculated from the wind speed information, and wind speed values for each altitude of the wind inflow surface of the target region.

[Fig. 7] Fig. 7 is an explanatory diagram showing a state in which the region of the wind inflow surface of the target region to be analyzed by the thermal and wind environment information generation device and the disaster prevention and mitigation information generation device according to an embodiment is divided.

[Fig. 8A] Fig. 8A shows prediction information for the velocity distribution of target region R0 generated by the disaster prevention and mitigation information generation device according to an embodiment using Local Analysis data at objective analysis coordinate position Q1.

[Fig. 8B] Fig. 8B shows prediction information for the velocity distribution of target region R1 generated using Local Analysis data at objective analysis coordinate position Q1.

[Fig. 9A] Fig. 9A shows prediction information for the wall surface pressure distribution of target region R0 generated by the disaster prevention and mitigation information generation device according to an embodiment using Local Analysis data at objective analysis coordinate position Q1.

[Fig. 9B] Fig. 9B shows prediction information for the wall surface pressure distribution of target region R1 generated using Local Analysis data at objective analysis coordinate position Q1.

[Fig. 10A] Fig. 10A shows prediction information for the velocity distribution generated with respect to target region R1 rotated according to wind direction D using Local Analysis data at objective analysis coordinate position Q3 by the disaster prevention and mitigation information generation device according to an embodiment.

[Fig. 10B] Fig. 10B shows prediction information for the wall surface pressure distribution generated with respect to target region R1 rotated according to wind direction D using Local Analysis data at objective analysis coordinate position Q3.

## DESCRIPTION OF EMBODIMENTS

The following describes a case where a thermal and wind environment information generation device installed in a PC (personal computer) generates thermal and wind environment information for a predetermined date and time for a predetermined outdoor region, and a disaster prevention and mitigation information generation device generates information related to disaster prevention and mitigation using the generated information.

(Configuration of PC Equipped with Thermal and Wind Environment Information Generation Device and Disaster Prevention and Mitigation Information Generation Device According to First Embodiment)

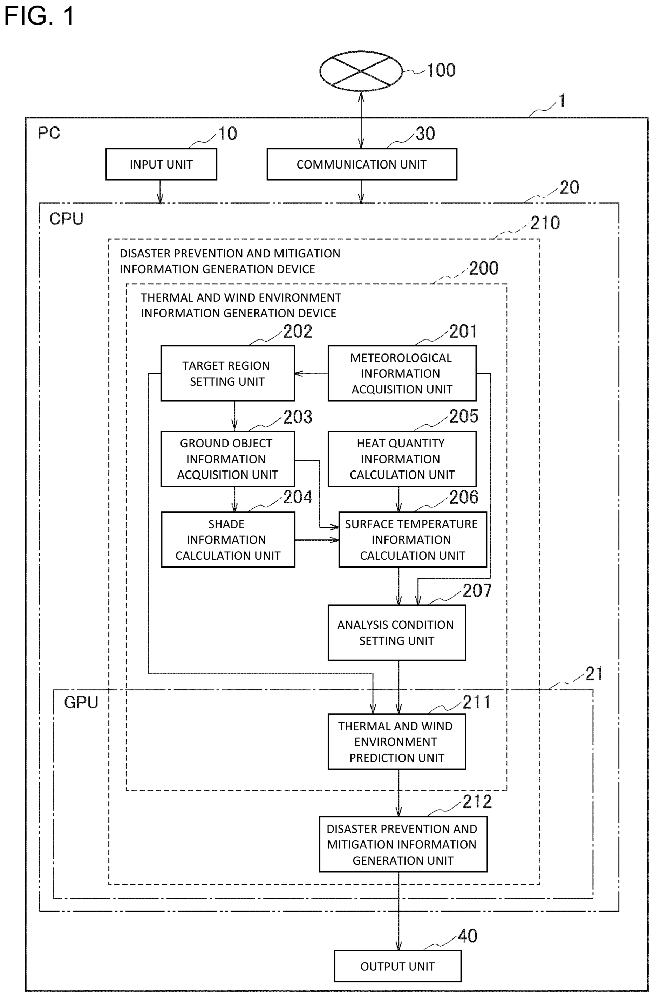

The configuration of a PC equipped with a thermal and wind environment information generation device and a disaster prevention and mitigation information generation device according to the first embodiment will be described with reference to Fig. 1. The PC 1 according to the present embodiment includes an input unit 10, a CPU (Central Processing Unit) 20, a communication unit 30, an output unit 40, and a memory (not shown) for storing programs. The CPU 20 performs the control described below by executing programs stored in the memory. The communication unit 30 is connected to an external wide-area communication network 100.

The input unit 10 inputs information on the position designated by the user as a target for generating thermal and wind environment information (hereinafter referred to as "target position") and information on the date and time for which thermal and wind environment information is to be generated (hereinafter referred to as "target date and time").

The CPU 20 incorporates a GPU (Graphics Processing Unit) 21. The CPU 20 has functions as a thermal and wind environment information generation device 200 and as a disaster prevention and mitigation information generation device 210. The CPU 20 includes a meteorological information acquisition unit 201, a target region setting unit 202, a ground object information acquisition unit 203, a shade information calculation unit 204, a heat quantity information calculation unit 205, a surface temperature information calculation unit 206, an analysis condition setting unit 207, and a thermal and wind environment prediction unit 211 and a disaster prevention and mitigation information generation unit 212 that execute Arithmetic Processing within the GPU 21.

The thermal and wind environment information generation device 200 is composed of the meteorological information acquisition unit 201, the target region setting unit 202, the ground object information acquisition unit 203, the shade information calculation unit 204, the heat quantity information calculation unit 205, the surface temperature information calculation unit 206, the analysis condition setting unit 207, and the thermal and wind environment prediction unit 211. The disaster prevention and mitigation information generation device 210 is composed of the thermal and wind environment information generation device 200 and the disaster prevention and mitigation information generation unit 212.

The meteorological information acquisition unit 201 acquires, via the wide-area communication network 100 from an external web server (not shown) or the like, wind direction information, wind speed information, and temperature information for a position within a predetermined range from a designated predetermined position, obtained by analyzing wide-area meteorological observation data.

The target region setting unit 202 sets a target region based on the wind direction information acquired by the meteorological information acquisition unit 201 such that the target region includes the designated target position and has a wider area on the upwind side of the target position than an area on downwind side of the target position.

The ground object information acquisition unit 203 acquires ground object information within the set target region. Specifically, the ground object information within the target region includes information on the types of objects in the target region such as buildings, roads, waterbodies such as ponds, green spaces such as parks, and information on the position, shape, size, and material of the objects.

The shade information calculation unit 204 calculates shade information indicating the position, shape, and size of shaded areas within the target region. The heat quantity information calculation unit 205 calculates, as heat quantity information for the target date and time within the target region, the solar radiation amount, reflection amount, atmospheric radiation amount, terrestrial radiation amount, sensible heat transport amount, latent heat transport amount, and ground heat transfer amount for each surface material within the target region at the target date and time.

The surface temperature information calculation unit 206 analyzes the heat balance equilibrium state based on the various heat quantity information calculated by the heat quantity information calculation unit 205, and calculates the surface temperature for each material and for each sunny/shaded condition within the target region at the target date and time. The surface temperature information calculation unit 206 also determines the objects and their surface materials for each position within the target region based on the information acquired by the ground object information acquisition unit 203. Furthermore, the surface temperature information calculation unit 206 calculates information on surface temperature for each position within the target region at the target date and time based on the determined material information for each position, the calculated surface temperature information for each material, and the shade information.

The analysis condition setting unit 207 sets, as conditions for analyzing the thermal and wind environment of the target region, the wind direction, wind speed, and temperature information of the air flowing into the target region acquired by the meteorological information acquisition unit 201, and the surface temperature for each position acquired by the surface temperature information calculation unit 206.

The thermal and wind environment prediction unit 211 predicts the thermal and wind environment by executing Thermofluid Analysis Processing for the target region based on the set conditions, thereby predicting at least any one of wind speed, wind direction, temperature, and wind pressure information for each localized position within the target region at a predetermined date and time.

The disaster prevention and mitigation information generation unit 212 generates disaster prevention and mitigation information composed of image information or video information that can be visually recognized by the user, based on the prediction information for the thermal and wind environment for each localized position in the target region analyzed by the thermal and wind environment prediction unit 211. The disaster prevention and mitigation information generation unit 212 outputs the generated disaster prevention and mitigation information to the output unit 40.

The output unit 40 is composed of a display device. The output unit 40 displays the disaster prevention and mitigation information generated by the disaster prevention and mitigation information generation unit 212.

(Operation of Thermal and Wind Environment Information Generation Device and Disaster Prevention and Mitigation Information Generation Device According to First Embodiment)

Next, the operation of the thermal and wind environment information generation device 200 and the disaster prevention and mitigation information generation device 210 according to the present embodiment will be described. In the present embodiment, as an example of the operation of these devices, the operation when the thermal and wind environment information generation device 200 generates prediction information for the wind environment at a scheduled typhoon passage date and time for a position designated by the user will be described. Additionally, the operation when the disaster prevention and mitigation information generation device 210 generates, as disaster prevention and mitigation information, a distribution map for each wind speed and a distribution map for each wind pressure on building walls for a region including the target position based on the information generated by the thermal and wind environment information generation device 200 will be described.

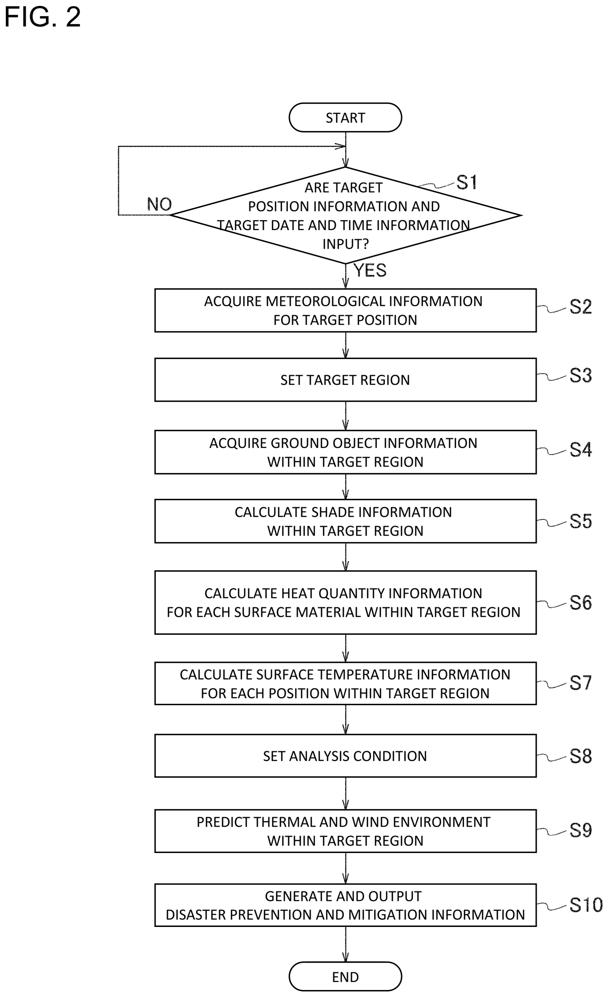

Fig. 2 is a flowchart showing the operation of the thermal and wind environment information generation device 200 and the disaster prevention and mitigation information generation device 210. First, the user inputs, from the input unit 10, target position information that is the target for generating wind environment information and disaster mitigation information, and date and time information when the wind speed is predicted to intensify due to the typhoon at that position.

For example, the user inputs target position information by designating a position on map information displayed on the output unit 40. Additionally, when a typhoon arrives, the wind speed becomes strongest before the typhoon center reaches, for example, about one hour before, so the user inputs one hour before the scheduled time when the typhoon center will reach the target position as the target date and time information.

When the target position information and target date and time information are input by the user (YES in step S1), the meteorological information acquisition unit 201 of the thermal and wind environment information generation device 200 acquires the meteorological information for the input target position. In the present embodiment, the meteorological information acquisition unit 201 acquires Local Analysis (LA) data provided by the Japan Meteorological Agency as the meteorological information for the target position via the wide-area communication network 100 (step S2).

Local Analysis (LA) data is meteorological information at objective analysis coordinate positions, which are lattice point positions at regular intervals of about 5 km, calculated by analyzing meteorological observation data at multiple positions irregularly distributed widely throughout the world. In other words, Local Analysis (LA) data is meteorological information at objective analysis coordinate positions calculated by assimilating wide-area observation data into meteorological analysis. Local Analysis (LA) data includes wind direction information, wind speed information, temperature information, etc. as meteorological information for the corresponding objective analysis coordinate position.

As described above, the meteorological information acquisition unit 201 acquires Local Analysis (LA) data for one of multiple objective analysis coordinate positions within a predetermined range from the target position designated by the user.

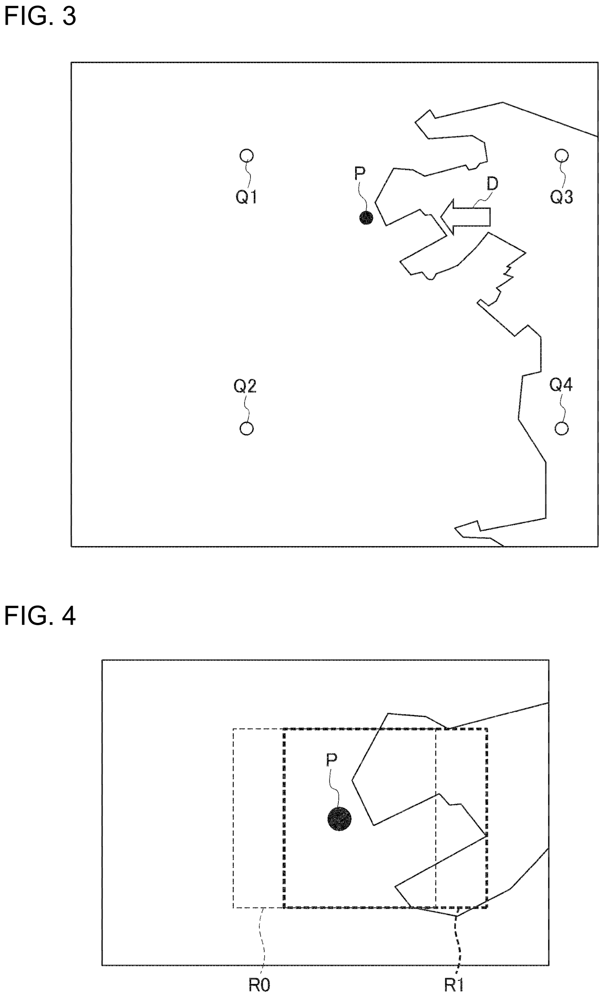

Fig. 3 is a diagram showing, on map information, the target position P designated by the user and four objective analysis coordinate positions Q1 to Q4 within a predetermined range from the target position P. The meteorological information acquisition unit 201 selects the nearest objective analysis coordinate position on the upwind side of the target position P from among the objective analysis coordinate positions Q1 to Q4 based on the wind direction information of objective analysis coordinate positions Q1 to Q4. Among the objective analysis coordinate positions Q1 to Q4, Q1 and Q2 are positions on land, and Q3 and Q4 are positions over the sea.

The meteorological information acquisition unit 201 determines that the wind direction at the target position P is the direction indicated by arrow D based on the wind direction information of objective analysis coordinate positions Q1 to Q4. Then, the meteorological information acquisition unit 201 selects objective analysis coordinate position Q3, which is the nearest position on the upwind side of the target position P, from among objective analysis coordinate positions Q1 to Q4. The meteorological information acquisition unit 201 acquires the Local Analysis (LA) data at the selected objective analysis coordinate position Q3 as the meteorological information for the target position P. The meteorological information acquisition unit 201 may apply a correction to the Local Analysis (LA) data at objective analysis coordinate position Q3 based on the distance between objective analysis coordinate position Q3 and target position P, etc., and use the corrected value as the meteorological information for target position P.

In this way, by using the Local Analysis (LA) data at the nearest objective analysis coordinate position Q3 on the upwind side of target position P as the meteorological information for target position P, highly accurate thermal and wind environment information according to the state of the wind flowing into target position P can be generated by the processing described later.

Next, the target region setting unit 202 sets a target region of a predetermined size including the designated target position P based on the wind direction information of the Local Analysis (LA) data at objective analysis coordinate position Q3 acquired by the meteorological information acquisition unit 201 (step S3). Here, as shown in Fig. 4, the target region setting unit 202 sets region R1, which has a wider area on the upwind side of target position P than region R0 centered on target position P, as the target region. In the present embodiment, the size of target region R1 is 2 km square on the ground surface and from 0 m to 350 m in altitude.

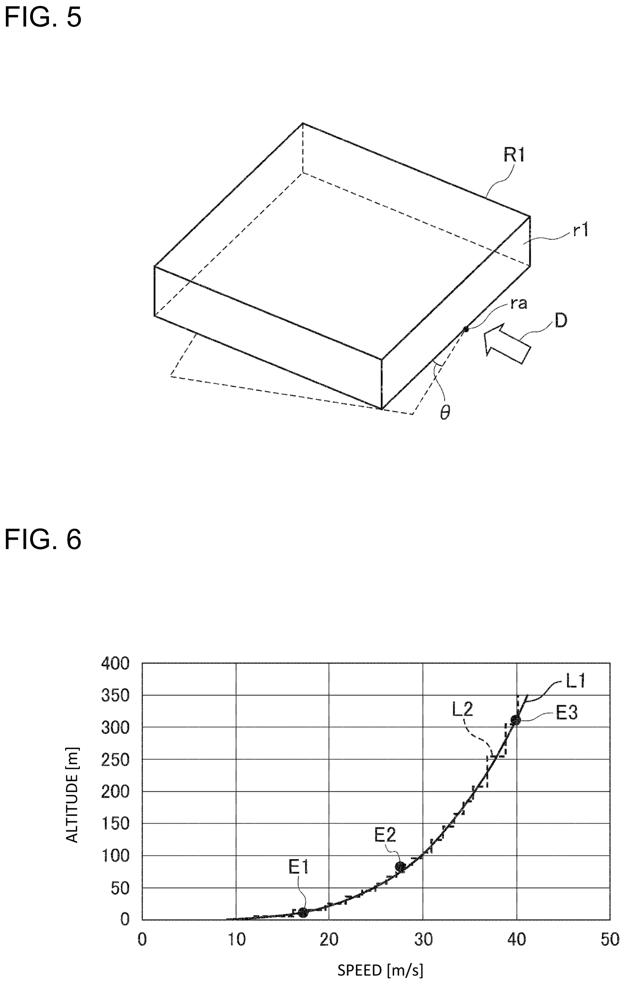

As shown in Fig. 5, the target region setting unit 202 may rotate the target region R1 so that the wind direction into target region R1 is perpendicular to one side surface r1 of target region R1. In the example of Fig. 5, the target region setting unit 202 rotates target region R1 by angle $\theta$ in the clockwise direction horizontal to the ground surface with the center ra of the width direction of side surface r1 as the base point. The angle $\theta$ is, for example, 10 degrees.

Next, the ground object information acquisition unit 203 acquires ground object information within the set target region R1 (step S4). Specifically, the ground object information includes information on the types of objects in the target region such as buildings, roads, waterbodies such as ponds, green spaces such as parks, and information on the position, shape, size, and material of the objects. Material information for objects includes, for example, concrete for buildings, asphalt for roads, water for waterbodies such as ponds, plants (trees) for green spaces such as parks, etc.

Methods by which the ground object information acquisition unit 203 acquires information on the position, shape, and size of objects in the target region include, for example, acquiring by on-site measurement, acquiring by modeling three-dimensional information from aerial surveys, etc. The ground object information acquisition unit 203 may also acquire information on the shape and size of buildings in the target region using the three-dimensional city model published by the Ministry of Land, Infrastructure, Transport and Tourism's G-Spatial Information Center (Project PLATEAU).

Additionally, the material information for objects in the target region acquired by the ground object information acquisition unit 203 uses, for example, information input in advance into map information. Material information for objects includes, for example, concrete for buildings, asphalt for roads, water for waterbodies such as ponds, plants (trees) for green spaces such as parks, etc.

Next, the shade information calculation unit 204 calculates shade information indicating the position, shape, and size of shaded areas at the target date and time within the target region R1 (step S5). For example, the shade information calculation unit 204 uses the ground object information of target region R1 acquired by the ground object information acquisition unit 203 to translate the ceiling surfaces of buildings in parallel along the ground surface along a vector indicating the direction in which sunlight falls, thereby calculating shade information.

Next, the heat quantity information calculation unit 205 calculates, as heat quantity information for the target date and time within target region R1, the solar radiation amount, reflection amount, atmospheric radiation amount, terrestrial radiation amount, sensible heat transport amount, latent heat transport amount, and ground heat transfer amount for each surface material within the target region at the target date and time (step S6). The heat quantity information calculation unit 205 calculates this information based on, for example, weather forecast information provided by the Japan Meteorological Agency.

Solar radiation amount is the amount of heat that reaches the ground from the sun. Since this solar radiation amount includes the heat amount from solar radiation scattered in the atmosphere, the solar radiation amount does not become "0" even in shaded areas. Reflection amount is the amount of heat reflected when solar radiation reaches the ground. Atmospheric radiation amount is the amount of heat transported from the atmosphere to the ground by radiative heat transfer. Terrestrial radiation amount is the amount of heat transported from the earth's surface to space by radiative heat transfer. Sensible heat transport amount is the amount of heat that moves from the ground to the atmosphere. Latent heat transport amount is the amount of heat required when moisture evaporates. Ground heat transfer amount is the amount of heat that moves into the ground.

Next, the surface temperature information calculation unit 206 calculates the surface temperature for each position within target region R1 at the target date and time based on the material information for each determined position and the calculated surface temperature information for each material. At that time, since the solar radiation amount is significantly reduced in areas recognized as shaded by the shade information calculation unit 204, the surface temperature information calculation unit 206 calculates the surface temperature of shaded areas to be lower than that of sunny areas. Additionally, the surface temperature information calculation unit 206 calculates the surface temperature of water surfaces and green spaces to be lower than areas of concrete or asphalt by performing calculations judging that water surfaces and green spaces have a large latent heat transport amount.

Here, when calculating the surface temperature for each position within the target region at the target date and time, the surface temperature information calculation unit 206 may calculate the temperature of the outer wall surfaces of buildings as the same temperature as the ground surface temperature calculated for the corresponding material, for example, concrete. By performing calculation processing in this way, the computational load can be reduced without significantly reducing accuracy in the Thermofluid Analysis Processing described later.

Next, the analysis condition setting unit 207 sets the wind direction into target region R1 at the target date and time, and the wind speed and temperature for each altitude, as Analysis Conditions for Thermofluid Analysis based on the information of the Local Analysis (LA) data at objective analysis coordinate position Q3 acquired by the meteorological information acquisition unit 201 (step S8).

In the present embodiment, to reduce the computational load in the Thermofluid Analysis Processing, as the Boundary Conditions for target region R1, the wind direction of the inflow surface, which is the inflow boundary, is set to one direction perpendicular to the inflow surface, and the wind speed is set to a constant flow velocity. Additionally, the upper boundary surface of target region R1 is set as the target boundary, and the other boundary surfaces are set as pressure outlet boundaries.

Here, in the Local Analysis (LA) data, wind speed information for each objective analysis coordinate position exists only at a sparse number of points between 0 m and 350 m, which is the altitude of target region R1. Therefore, the analysis condition setting unit 207 calculates and interpolates wind speed information for each altitude from the wind speed information at several points in the Local Analysis (LA) data at objective analysis coordinate position Q3.

The vertical wind speed distribution in urban areas, etc., is expressed by the following formula (1) according to the standards of the Architectural Institute of Japan.

[Formula 1]

$$\frac{V_{Z1}}{V_{Z2}} = \left(\frac{Z_1}{Z_2}\right)^{\alpha} \qquad (1)$$

In the above formula (1), Z1 and Z2 represent different altitudes, VZ1 is the wind speed at altitude Z1, VZ2 is the wind speed at altitude Z2, and $\alpha$ is the power law exponent, whose value varies depending on the surface conditions. $\alpha$ has a larger value in areas with many buildings and large surface roughness. As a rough guide, the value of $\alpha$ is 0.15 for plains, 0.2 for residential areas, 0.27 for urban areas, and 0.35 for large cities.

In the present embodiment, the analysis condition setting unit 207 calculates 0.25, close to an urban area, as the $\alpha$ value for target region R1 using the Least Squares Method based on the results obtained from the Local Analysis (LA) data at objective analysis coordinate position Q3.

In the graph of Fig. 6, points E1 to E3 show wind speed information at multiple altitudes in target region R1 obtained from the Local Analysis (LA) data at objective analysis coordinate position Q3. In the graph of Fig. 6, the thick solid line L1 shows an approximation curve calculated by the Least Squares Method based on the above formula (1) from the wind speed information at points E1 to E3. Based on this approximation curve, the analysis condition setting unit 207 calculates wind speed values for each altitude within 0 m to 350 m altitude flowing into target region R1 at the target date and time, and sets them as Analysis Conditions for Thermofluid Analysis.

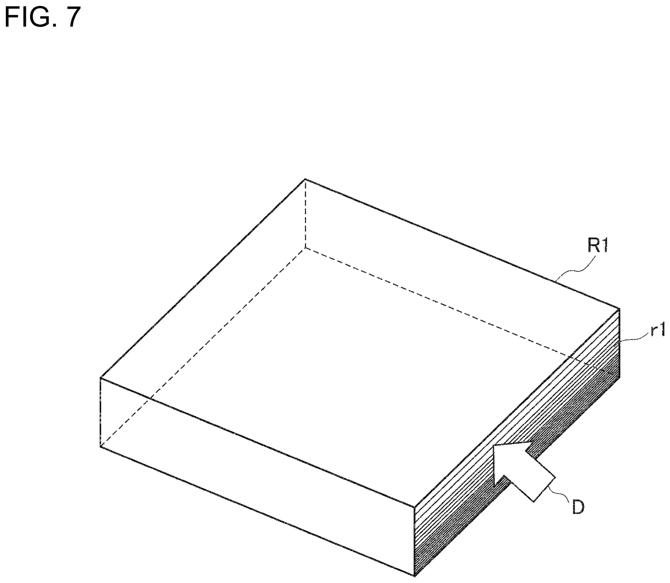

The analysis condition setting unit 207 may input wind speed values for each altitude of target region R1 used in Numerical Fluid Analysis as a function showing velocity distribution in the height direction. Alternatively, as shown in Fig. 7, the analysis condition setting unit 207 may divide the wind inflow surface r1 of target region R1 into multiple regions in the height direction and set wind speed values for each region, thereby approximately reproducing the velocity distribution. In this case, the analysis condition setting unit 207 sets wind speed values, for example, at finer altitude intervals for lower altitudes.

By setting wind speed values for each altitude in this way, highly accurate processing can be executed in the Thermofluid Analysis Processing described later.

The thick dotted line L2 in Fig. 6 shows the wind speed values set by the analysis condition setting unit 207 for each divided region of the inflow surface r1 of target region R1.

Next, the analysis condition setting unit 207 sets the surface temperature for each position within the target region at the target date and time acquired by the surface temperature information calculation unit 206.

Next, the thermal and wind environment prediction unit 211 analyzes the atmospheric flow and temperature of the target region at the target date and time by a general Thermofluid Analysis (CFD: Computational Fluid Dynamics) method based on the conditions set by the analysis condition setting unit 207, and predicts the thermal and wind environment (step S9). Specifically, the thermal and wind environment prediction unit 211 predicts the thermal and wind environment for each position within the target region at the target date and time by calculating the atmospheric flow and temperature of each rectangular parallelepiped-shaped or cubic-shaped space obtained by three-dimensionally dividing the ground space of the target region in a lattice pattern. The thermal and wind environment information predicted by the thermal and wind environment prediction unit 211 includes at least any one of wind speed, wind direction, temperature, and wind pressure information for each position within the target region at the target date and time.

Here, to accelerate the analysis processing, it is considered preferable for the thermal and wind environment prediction unit 211 to adopt a lattice Boltzmann Method using the Boltzmann Equation rather than a method using the Navier-Stokes Equations, which is a general Thermofluid Analysis Processing method. The lattice Boltzmann method is a method excellent in parallelization of calculations and has good compatibility with GPUs, which have high parallel computing capabilities. As software for executing Thermofluid Analysis in GPU 21, the thermal and wind environment prediction unit 211 can use, for example, Discovery Live software from ANSYS (registered trademark).

Next, the disaster prevention and mitigation information generation unit 212 generates disaster prevention and mitigation information composed of image information or video information that can be visually recognized by the user based on the prediction information for the thermal and wind environment in the target region analyzed by the thermal and wind environment prediction unit 211, and outputs it to the output unit 40 (step S10).

Examples of disaster prevention and mitigation information include streamline distribution information showing the atmospheric flow in the ground space of the target region, spatial wind speed distribution information showing areas for each wind speed range in the ground space color-coded, or wind speed distribution information on a plane at a predetermined height above the ground parallel to the ground.

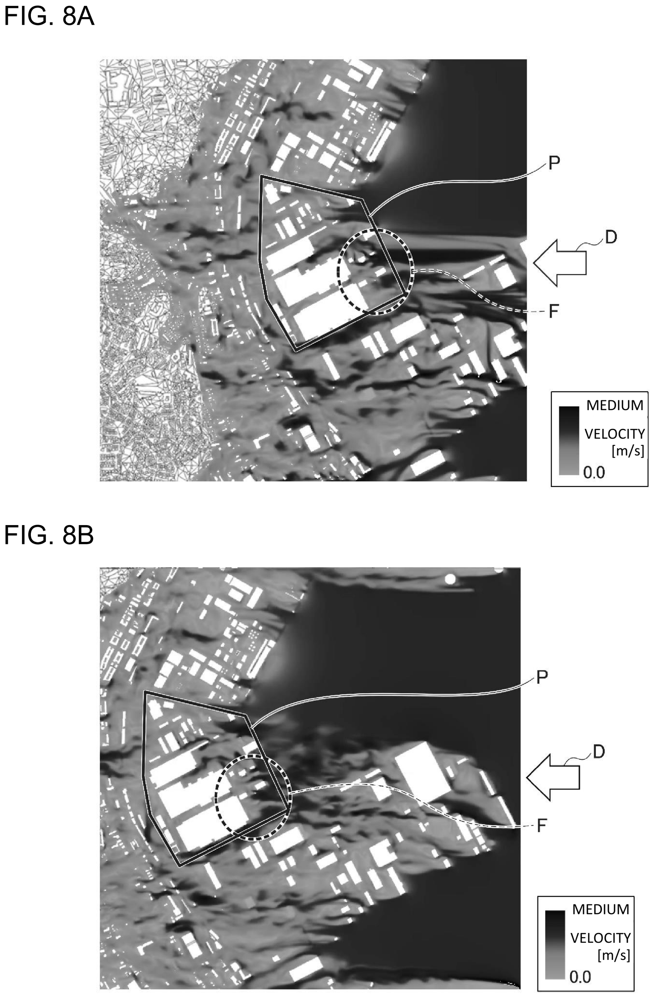

Fig. 8A shows, as an example, prediction information for the velocity distribution at a cross-section at 10 m height at the target date and time in target region R0, generated using the Local Analysis (LA) data at Q1, which is the nearest objective analysis coordinate position to target position P. Fig. 8B shows prediction information for the velocity distribution at a cross-section at 10 m height at the target date and time in target region R1, generated using the Local Analysis (LA) data at objective analysis coordinate position Q1.

In Figs. 8A and 8B, the area enclosed by solid lines is the target position P. In Figs. 8A and 8B, arrow D is the wind direction. In Figs. 8A and 8B, the area enclosed by dotted lines is the upwind area F near target position P. Comparing Fig. 8A and Fig. 8B, by shifting the target region from R0 to R1, the number of upwind buildings considered in the analysis processing increases, and the wind speed distribution in the area including the upwind area F near target position P differs due to the influence of upwind buildings. It is considered that the prediction accuracy of the wind speed distribution has improved by shifting the target region from R0 to R1.

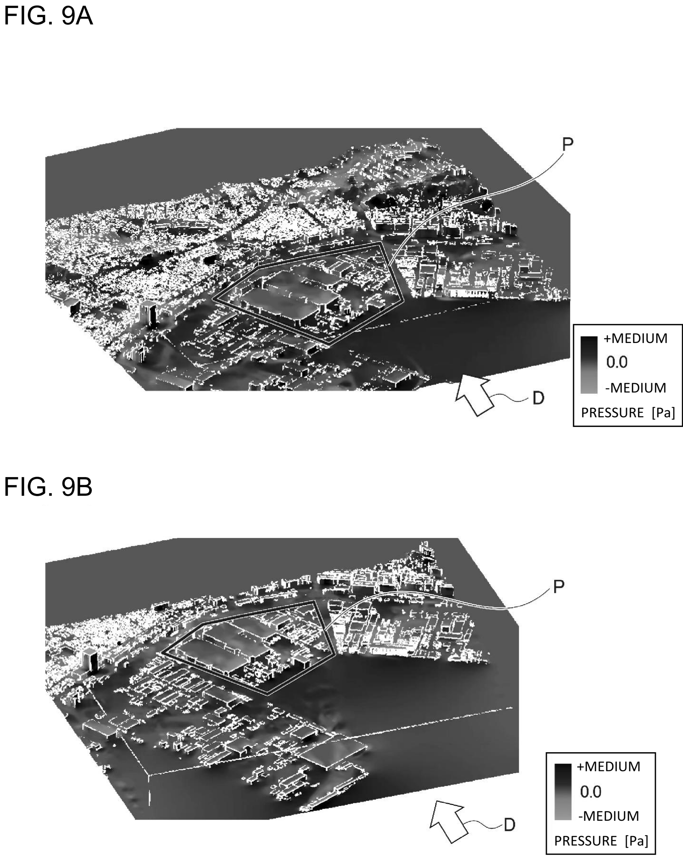

Additionally, Fig. 9A shows prediction information for the wall surface pressure distribution at the target date and time in target region R0, i.e., the wind pressure applied to building walls, generated using the Local Analysis (LA) data at objective analysis coordinate position Q1. Fig. 9B shows prediction information for the wall surface pressure distribution at the target date and time in target region R1, generated using the Local Analysis (LA) data at objective analysis coordinate position Q1.

In Figs. 9A and 9B, the area enclosed by solid lines is the target position P. In Figs. 9A and 9B, arrow D is the wind direction D. Comparing Fig. 9A and Fig. 9B, by shifting the target region from R0 to R1, the number of upwind buildings considered in the analysis processing increases, and there are differences in the wall surface pressure distribution applied to buildings within target position P. It is considered that the prediction accuracy of the wall surface pressure distribution has improved by shifting the target region from R0 to R1.

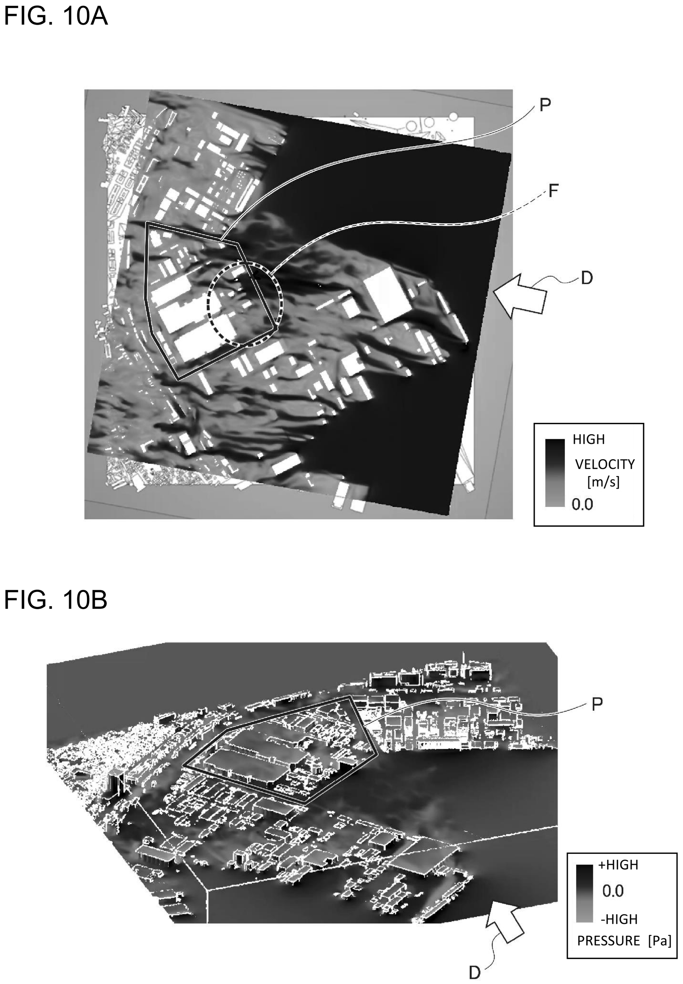

Additionally, Fig. 10A shows prediction information for the velocity distribution at a cross-section at 10 m height at the target date and time, generated with respect to target region R1 rotated according to wind direction D, using the Local Analysis (LA) data at objective analysis coordinate position Q3. Comparing Fig. 10A and Fig. 8B, by changing the Local Analysis (LA) data used from data at objective analysis coordinate position Q1 to data at Q3 and rotating target region R1 according to wind direction D, strong winds over the sea are considered, and the overall wind speed has increased. It is considered that the prediction accuracy of the wind speed distribution has improved by changing the data used for analysis from data at objective analysis coordinate position Q1 to data at objective analysis coordinate position Q3 and rotating target region R1 according to wind direction D.

Additionally, Fig. 10B shows prediction information for the wall surface pressure distribution at the target date and time, generated with respect to target region R1 rotated according to wind direction D, using the Local Analysis (LA) data at objective analysis coordinate position Q3. Similarly, when comparing Fig. 10B and Fig. 9B, by changing the Local Analysis (LA) data used from data at objective analysis coordinate position Q1 to data at Q3 and rotating target region R1 according to wind direction D, strong winds over the sea are considered, and the overall wind speed has increased. It is considered that the prediction accuracy of the wall surface pressure distribution has improved by changing the data used for analysis from data at objective analysis coordinate position Q1 to data at objective analysis coordinate position Q3.

According to the above embodiment, prediction information for the wind environment at a localized position during typhoon passage and prediction information related to disaster prevention and mitigation can be generated with high accuracy in real time while considering wide-area meteorological information. By visually recognizing the generated prediction information related to disaster prevention and mitigation, the user can take actions for disaster prevention and mitigation in preparation for typhoon passage.

In the above-described embodiment, the case of generating prediction information for the wind environment at a predetermined position during typhoon passage and prediction information related to disaster prevention and mitigation has been described, but the invention is not limited to this. For example, it is also possible to generate prediction information related to disaster prevention and mitigation regarding blizzards, dense fog, fires, etc.

For example, the meteorological information acquisition unit 201 acquires, as meteorological information, information on snow concentration in the wind in addition to wind direction and wind speed at the target position, and the analysis condition setting unit 207 sets this information as Analysis Conditions. Then, the thermal and wind environment prediction unit 211 performs Thermofluid Analysis based on the set information, and based on the analysis results, the disaster prevention and mitigation information generation device 210 generates and outputs prediction information for snow concentration distribution for each position within the target region at the target date and time as disaster prevention and mitigation information.

By generating prediction information for snow concentration distribution in this way, warnings for vehicles attempting to enter areas with high snow concentration can be output as disaster prevention and mitigation information.

Additionally, the meteorological information acquisition unit 201 acquires, as meteorological information, information on fog concentration in the wind in addition to wind direction and wind speed at the target position, and the analysis condition setting unit 207 sets this information as Analysis Conditions. Then, the thermal and wind environment prediction unit 211 performs Thermofluid Analysis based on the set information, and based on the analysis results, the disaster prevention and mitigation information generation device 210 generates and outputs prediction information for fog concentration distribution for each position within the target region at the target date and time as disaster prevention and mitigation information.

By generating prediction information for fog concentration distribution in this way, warnings for vehicles attempting to enter areas with high fog concentration can be output as disaster prevention and mitigation information.

Additionally, the meteorological information acquisition unit 201 acquires, as meteorological information, information on the concentration of smoke and carbon dioxide ($CO_2$) generated by fire in addition to wind direction and wind speed at the target position, and the analysis condition setting unit 207 sets this information as Analysis Conditions. Then, the thermal and wind environment prediction unit 211 performs Thermofluid Analysis based on the set information, and based on the analysis results, the disaster prevention and mitigation information generation device 210 generates and outputs prediction information for smoke and $CO_2$ concentration distribution for each position within the target region at the target date and time as disaster prevention and mitigation information.

By generating prediction information for smoke and $CO_2$ concentration distribution in this way, information such as audio guidance for evacuation routes with low smoke and $CO_2$ concentration can be output as disaster prevention and mitigation information.

Note that in the above-described embodiment, the case of using Local Analysis (LA) data as meteorological information for acquiring wind direction and wind speed used in Thermofluid Analysis Processing has been described, but the invention is not limited to this. For example, other meteorological information provided by the Japan Meteorological Agency, such as information acquired from a local model, information analyzed using a WRF (Weather Research and Forecasting) model, or actual observation data, may be used.

Additionally, in the above-described embodiment, the case where the thermal and wind environment information generation device 200 generates prediction information related to the wind environment has been described, but the invention is not limited to this, and prediction information related to the thermal environment may be generated. In this case, the meteorological information acquisition unit 201 acquires temperature information as meteorological information for the target position, the analysis condition setting unit 207 sets temperature information together with wind direction and wind speed information as Analysis Conditions, and the thermal and wind environment prediction unit 211 generates prediction information related to the thermal environment according to the Analysis Conditions.

Although several embodiments have been described, modifications or variations of the embodiments can be made based on the above disclosure. All the components of the above embodiments and all the features described in the claims may be individually extracted and combined as long as they do not contradict each other.

The present disclosure can contribute, for example, to SDG Goal 11 of the Sustainable Development Goals (SDGs): "Make cities and human settlements inclusive, safe, resilient and sustainable."

REFERENCE SIGNS LIST

10      input unit
20      CPU
30      communication unit
40      output unit
100     wide-area communication network
200     thermal and wind environment information generation device
201     meteorological information acquisition unit
202     target region setting unit
203     ground object information acquisition unit
204     shade information calculation unit
205     heat quantity information calculation unit
206     surface temperature information calculation unit
207     analysis condition setting unit
210     disaster prevention and mitigation information generation device
211     thermal and wind environment prediction unit
212     disaster prevention and mitigation information generation unit

Claims

1.   A thermal and wind environment information generation device comprising:

a meteorological information acquisition unit that acquires, as meteorological information for a target position, wind direction information, wind speed information, and temperature information for a position within a predetermined range from the target position, obtained by analyzing wide-area meteorological observation data;

a target region setting unit that sets a predetermined region including the target position as a target region; and a thermal and wind environment prediction unit that generates prediction information for a thermal and wind environment including at least any one of wind speed, wind direction, temperature, and wind pressure for each position within the target region at a predetermined date and time, by executing Thermofluid Analysis Processing for the target region based on the meteorological information acquired by the meteorological information acquisition unit.

2. The thermal and wind environment information generation device according to claim 1, wherein the target region setting unit sets the target region based on the wind direction information acquired by the meteorological information acquisition unit such that the target region includes the target position and has a wider area on upwind side of the target position than an area on downwind side of the target position.

3. The thermal and wind environment information generation device according to claim 1, wherein the meteorological information acquisition unit acquires meteorological information for any position selected from a plurality of positions within a predetermined range from the target position as the meteorological information for the target position.

4. The thermal and wind environment information generation device according to claim 3, wherein

the meteorological information acquisition unit
selects the nearest position on the upwind side of the target position from among the plurality of positions within a predetermined range from the target position, and
acquires the meteorological information for the selected position as the meteorological information for the target position.

5. The thermal and wind environment information generation device according to claim 1, wherein

the meteorological information acquisition unit
acquires a plurality of wind speed information items for each height from the ground as the wind speed information, and
acquires a plurality of temperature information items for each height from the ground as the temperature information.

6. The thermal and wind environment information generation device according to claim 1, further comprising a ground object information acquisition unit that acquires information on the type, position, shape, size, and material of ground objects within the target region, wherein the thermal and wind environment prediction unit generates the prediction information for the thermal and wind environment using the information acquired by the ground object information acquisition unit.

7. A thermal and wind environment information generation method by a thermal and wind environment information generation device, comprising:

acquiring, as meteorological information for a target position, wind direction information, wind speed information, and temperature information for a position within a predetermined range from the target position, obtained by analyzing wide-area meteorological observation data;
setting a predetermined region including the target position as a target region; and
generating prediction information for the thermal and wind environment including at least any one of wind speed, wind direction, temperature, and wind pressure for each position within the target region at a predetermined date and time, by executing Thermofluid Analysis Processing for the target region based on the acquired information.

8. A disaster prevention and mitigation information generation device comprising:

the thermal and wind environment information generation device according to any one of claims 1 to 6; and
a disaster prevention and mitigation information generation unit that generates information for disaster prevention or mitigation for each position within the target region using the prediction information for the thermal and wind environment generated by the thermal and wind environment prediction unit.

9. The disaster prevention and mitigation information generation device according to claim 8, wherein

the disaster prevention and mitigation information generation unit outputs the generated information for disaster prevention or mitigation for each position within the target region to an output unit.

10. A disaster prevention and mitigation information generation method, wherein a disaster prevention and mitigation information generation device comprising the thermal and wind environment information generation device according to any one of claims 1 to 6 and a disaster prevention and mitigation information generation unit
generates information for disaster prevention or mitigation for each position within the target region using the prediction information for the thermal and wind environment generated by the thermal and wind environment information generation device.

FIG. 1

# FIG. 2

START

S1 — ARE TARGET POSITION INFORMATION AND TARGET DATE AND TIME INFORMATION INPUT?

NO

YES

ACQUIRE METEOROLOGICAL INFORMATION FOR TARGET POSITION — S2

SET TARGET REGION — S3

ACQUIRE GROUND OBJECT INFORMATION WITHIN TARGET REGION — S4

CALCULATE SHADE INFORMATION WITHIN TARGET REGION — S5

CALCULATE HEAT QUANTITY INFORMATION FOR EACH SURFACE MATERIAL WITHIN TARGET REGION — S6

CALCULATE SURFACE TEMPERATURE INFORMATION FOR EACH POSITION WITHIN TARGET REGION — S7

SET ANALYSIS CONDITION — S8

PREDICT THERMAL AND WIND ENVIRONMENT WITHIN TARGET REGION — S9

GENERATE AND OUTPUT DISASTER PREVENTION AND MITIGATION INFORMATION — S10

END

EP 4 726 438 A1

FIG. 3

FIG. 4

15

## FIG. 5

## FIG. 6

FIG. 7

FIG. 8A

FIG. 8B

FIG. 9A

FIG. 9B

## FIG. 10A

## FIG. 10B

## INTERNATIONAL SEARCH REPORT

| International application No. |
|---|
| **PCT/JP2023/037420** |

| A. | CLASSIFICATION OF SUBJECT MATTER |
|---|---|

*G01W 1/10*(2006.01)i
FI:  G01W1/10 R

According to International Patent Classification (IPC) or to both national classification and IPC

| B. | FIELDS SEARCHED |
|---|---|

Minimum documentation searched (classification system followed by classification symbols)

G01W1/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2023-094840 A (IHI CORP.) 06 July 2023 (2023-07-06) | 1, 3, 5-10 |
|  | paragraphs [0032]-[0048] | |
| A | | 2,4 |
| Y | CN 112577702 A (CHINA CONSTRUCTION EIGHTH ENGINEERING DIVISION CORP., LTD.) 30 March 2021 (2021-03-30) paragraphs [0041]-[0047], fig. 2 | 1, 3, 5-10 |
| Y | 高田　眞人　他, 屋外熱収支シミュレーションとＣＦＤによる熱と気流の全時刻連成解析手法の開発, 日本建築学会技術報告集, June 2018, vol. 24, no. 57, pp. 715-719, (TAKATA, Masahito et al., DEVELOPMENT OF 24 HOURS COUPLED ANALYSIS OF HEAT BALANCE AND AIRFLOW USING BOTH NUMERICAL SIMULATION ON OUTDOOR THERMAL ENVIRONMENT AND CFD, AIJ Journal of Technology and Design) particularly, see column "4.2" | 5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2023** | **21 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/037420**

| Patent document cited in search report | | | Publication date (day/month/year) | Patent family member(s) | Publication date (day/month/year) |
|---|---|---|---|---|---|
| JP | 2023-094840 | A | 06 July 2023 | (Family: none) | |
| CN | 112577702 | A | 30 March 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002296362 A

- JP 2001325555 A